# EUROPEAN PATENT APPLICATION

(11) **EP 3 875 167 A1**
(43) Date of publication of application: **08.09.2021**
(21) Application number: 20020105.1
(22) Date of filing: 06.03.2020
(51) Int. Cl.: B01D 53/30, B01D 53/34, B01D 53/56, B01D 53/78

(54) **IMPROVED NOX REMOVAL METHOD**

(71) Applicant: Linde GmbH, 82049 Pullach (DE)
(72) Inventor: Obermeyer, Heinz-Dieter, 85356 Freising (DE); Kaltenegger, Johann, 85051 Ingolstadt (DE); Domanski, Stephanie, 80799 München (DE); Groebe, Robert, 21682 Stade (DE); Gebhardt, Jens, 33813 Oerlinghausen (DE); Staib, Günter, 21682 Stade (DE); Stapel, Harald, 33617 Bielefeld (DE)
(74) Representative: Gellner, Bernd

(57) **Abstract**

The present invention relates to an improved method for NOx removal from flue or waste gas streams in incinerators, waste treatment plants or kilns with wet caustic scrubbers or wet ionizing scrubbers. The present method reduces the operating costs by significantly reducing the amount of ozone required to lower NOx emissions to a certain limit. In accordance with the method of the invention, ozone is injected into the flue gas pipework and/or the APC downstream of the incinerator unit, waste treatment unit or kiln and upstream of a wet caustic scrubber or wet ionizing scrubber. A sub-stoichiometric amount of ozone is utilized such that NO is selectively oxidized by the ozone to NO₂, a water-soluble species, rather than being first oxidized to NO₂, and then N₂O₅ as practiced in the prior art. NO₂ is water soluble and is readily removed in a scrubbing operation.

## Description

### Field of the Invention

The present invention relates to an improved method for NOx removal from flue or waste gas streams in incinerators, waste treatment plants or kilns with wet caustic scrubbers or wet ionizing scrubbers.

### Background of the Invention

The incineration of chemical and hazardous waste is of increasing interest when alternative methods to treat wastes are prohibitively costly or no longer permitted. International treaties and United States environmental regulations have limited alternatives such as the dumping of waste or ineffective treatments before emitting to the atmosphere. Process industries that desire to reach peak production often undertake optimization and intensification exercises to maximize production and profits with relatively low marginal investment in capital. These exercises will often result in an increase in the quantity of waste generated which may be beyond the capability of the already installed incineration system to handle. A new incineration system can be expensive and generally will attract stricter environmental scrutiny. Notwithstanding the need for incineration equipment, the control of contaminants, particularly nitrogen oxides in gas streams has always been challenging.

The practice of enriching air with gaseous oxygen for improving combustion processes in glass and metal furnaces is well known. Oxygen enrichment can improve both the thermal destruction of waste as well as increase throughput. Oxygen enrichment, however, is well known to increase nitrogen oxides formation in combustion processes. Environmental permits generally restrict an incineration facility from increasing throughput when it results in higher emissions. Air pollution control systems fitted on incinerators can generally handle a higher load of other air pollutants such as sulfur oxides, particulates, acid gases such as HCI, HF, Cl₂, heavy metals and organic toxins such as dioxins, furans and PCBs, without sacrificing performance while nitrogen oxides control remains difficult.

State of the art control of nitrogen oxides emissions in incineration is generally achieved by combustion modifications. There are typically two techniques used; low nitrogen oxides burners and combustion staging. Low nitrogen oxides burners lower the flame temperature thereby forming less nitrogen oxides. In combustion staging, in the primary stage the initial combustion is carried out with limited air present, thereby forming a fuel rich environment. This ensures the formation of a reducing zone immediately downstream of the primary combustion zone where nitrogen oxides are reduced by a high level of carbon monoxide being present in the combustion products. In the second stage of the process, secondary air is introduced to complete the oxidation of combustion products including the carbon monoxide with or without the addition of supplemental fuel. Ammonia may be injected to lower nitrogen oxides by the SNCR (selective non catalytic reduction) method. A higher end method for controlling nitrogen oxides for combusting processes is SCR (selective catalytic reduction). This is not a preferred method for treating incineration exhaust due to a variety of reasons including expensive capital costs and energy intensive configurations required to offer sustainable performance.

Ozone injection into an Air Pollution Control (APC) system for treating incineration exhaust enables effective nitrogen oxides removal along with other contaminants. The chemistry of nitrogen oxides oxidation with ozone is known and described in a number of patents including U.S. Patent Nos. 5,206,002; 5,985,223; 6,162,409; 6,649,132; and 7,303,735, which are incorporated herein by reference. In prior art processes ozone is injected into the flue gas stream and upstream of a scrubber unit. Nitrogen oxides, NO and NO₂ are selectively oxidized via the following reactions to N₂O₅, a highly water-soluble species.

NO + O₃ → NO₂ + O₂ (g)

2NO₂ + O₃ → N₂O₅ + O₂ (g)

N₂O₅ + H₂O → 2HNO₃ (I)

HNO₃ + NaOH → NaNO₃ + H₂O (I)

A molar ratio, of 1.5 O₃ to NO is required based on the above chemical equations, where all NO is converted first to NO₂ and then N₂O₅. This pentavalent form of nitrogen oxide is quite soluble in aqueous solutions. The quenched stream is then saturated with water vapor which converts the oxidized nitrogen oxides into stable oxyacids such as nitric acid, which will mix with water and be captured in the wet scrubbing operation.

In industrial applications molar ratios greater than 1.5, and sometimes greater than 2 are required as ozone decomposes or is consumed by other species present in the flue gas. In incineration units or kilns the majority (approximately 90% or above) of NOx is present as NO (thermal NOx) due to the high operating temperatures of these units. Well-established alternative technologies include Selective Catalytic Reduction (SCR) and Selective Non-Catalytic Reduction (SNCR). Ozone can be employed to achieve the same if not lower NOx emissions than SNCR and SCR or can be used in combination with these technologies without having the risk of ammonia slip like the latter. Although ozone injection into the flue gas offers the lowest possible emissions of NOx, a significant amount of energy is required to generate ozone using an ozone generator. This means that operating costs can be higher than for alternative technologies, SCR and SNCR. Accordingly, ozone has not been consistently competitive in comparison to alternative technologies

The present invention provides a new method for ozone-based control of contaminants such as nitrogen oxides. The method of the invention allows for a higher throughput of waste gas streams emanating from the incineration unit while also lowering the emission of nitrogen oxides to the atmosphere, which reduces the unit cost of waste disposal. The invention also requires minimal capital investment, does not disrupt production activity, and requires only minimal changes in processing equipment. Thus, this proposed invention will assist in the commercialization of and adoption of ozone for NOx abatement in incinerator units, waste treatment plants, or kilns.

### Summary of the Invention

The present invention relates to an improved method for NOx removal from flue or waste gas streams generated by incinerators, waste treatment plants, kilns and the like, which are optionally equipped with wet caustic scrubbers or wet ionizing scrubbers. The method of the invention allows for a higher throughput of waste gas streams emanating from the incineration unit while also lowering the emission of nitrogen oxides to the atmosphere, effectively reducing the unit cost of waste disposal.

### Detailed Description of the Invention

Nitrogen oxides formed during combustion are thermal, prompt and fuel nitrogen oxides. Thermal nitrogen oxides are nitrogen oxides formed through high temperature oxidation of the diatomic nitrogen found in combustion air. Prompt nitrogen oxides are the source of nitrogen oxides attributed to the reaction of atmospheric nitrogen with radicals such as C, CH, and CH₂ fragments derived from fuel, where this cannot be explained by either the thermal or fuel processes. Fuel nitrogen oxides are the major source of nitrogen oxides produced from nitrogen-bearing fuels such as certain coals and oil by the conversion of fuel bound nitrogen to nitrogen oxides during combustion.

During combustion, the nitrogen bound in the fuel is released as a free radical and ultimately forms free nitrogen or NO. Nitrogenous compounds in the waste stream also form additional nitrogen oxides during combustion. For the desired thermal destruction of waste, the combustion products containing gas stream is maintained at the required temperature for a predetermined period of time in the incinerator furnace. In order to increase throughput of the waste in the incinerator, some of the primary air used in the combustion process is replaced with oxygen, keeping the total volume of the gas within design flow. Oxygen enrichment will often result in an increase in flame temperature. The higher flame temperature due to oxygen enrichment will improve waste destruction efficiency but will cause an increase in thermal nitrogen oxides formation.

The combustion waste gas stream exiting the incinerator containing the combustion products is fed optionally to a waste heat boiler or directly to a quench unit where it will be quenched with an aqueous solution. The cooling and quenching is carried out to minimize the formation of further contaminants such as PCBs, dioxins and furans.

Although ozone injection into the flue gas offers the lowest possible emissions of NOx a significant amount of energy is required to generate ozone using an ozone generator. This means that operating costs can be higher than for alternative technologies, SCR and SNCR. Accordingly, ozone has not been consistently competitive in comparison to alternative technologies, such as SCR and SNCR in incinerator units, waste treatment plants, or kilns previously. However, ozone is favored for use in these applications where the flue gases have a typically high particulate load. SCR technology does not handle particulate load well, and the catalyst used will more quickly be consumed or poisoned. On the other hand, ozone is particularly robust to heavy particulate loads as it selectively oxidizes NO and NO₂ making it ideal for use in such industrial applications.

The proposed invention reduces the operating costs by significantly reducing the amount of ozone required to lower NOx emissions to a certain limit. In accordance with the method of the invention, ozone is injected into the flue gas pipework and/or the APC downstream of the incinerator unit, waste treatment unit or kiln and upstream of a wet caustic scrubber or wet ionizing scrubber, for example utilizing a scrubber solution such as sodium hydroxide (NaOH), or potassium hydroxide (KOH). Nitrogen oxide, NO is selectively oxidized by the ozone via the following reaction to NO₂, a water-soluble species, rather than in the prior art where NO is oxidized to NO₂, and then N₂O₅.

NO + O₃ → NO₂ + O₂ (g)

In accordance with the invention the present inventors have unexpectedly found that NO can be selectively oxidized to NO₂ by adding ozone to the flue gas in sub-stoichiometric ratios, below about 1.5, in another embodiment from about 0.3 to less than 1.5 and in yet another embodiment from about 0.5 to about 1.0. Since the reaction rate for the oxidation of NO to NO₂ is approximately 500 times faster than the reaction from NO₂ to N₂O₅, the partial oxidation of NO to NO₂, rather than complete oxidation to N₂O₅ can be controlled by utilizing a sub-stoichiometric amount of ozone and by maintaining a low residence time in the APC, such that, the time is too short for all NO to be converted to NO₂ and for any NO₂ to be converted to N₂O₅. During full-scale testing, the residence time needed to limit NO₂ oxidation to N₂O₅ was generally found to be less than or equal to 3 seconds, in another embodiment from about 0.5 to about 2 seconds.

In one embodiment, the amount of ozone added and the residence time of the ozone and waste gas stream in the reaction zone is effective to oxidize from about 20 to about 80% of the NO present in said waste gas stream to NO₂. In another embodiment, the amount of ozone added and the residence time of the ozone and waste gas stream in the reaction zone is effective to oxidize from about from 30 to 70% of the NO present in said waste gas stream to NO₂. In yet another embodiment, the amount of ozone added and the residence time of the ozone and waste gas stream in the reaction zone is effective to oxidize from about 40 to 55% of the NO present in said waste gas stream to NO₂.

A secondary reaction was also observed due to the wet caustic scrubber being downstream of ozone injection, resulting in a higher efficiency and controllability of the NOx emissions reduction. In full-scale testing a wet caustic scrubbing solution utilizing NaOH was employed. As illustrated by the reaction equation below, the partial oxidation of NO to NO₂ enabled the reaction of NO, NO₂ and NaOH to Sodium Nitrite, rather than Sodium Nitrate as proposed in prior art.

NO + NO₂ + NaOH → 2 NaNO₂ + H₂O

This reaction can also be observed for other wet caustic scrubbing solutions where hydroxide ions (OH-) are present, resulting in the formation of nitrite and water. Nitrite is easily oxidized in water to nitrate. Nitrates are treated in a denitrification wastewater treatment process, to yield dinitrogen (N₂).

During full-scale testing NOx emissions below < 10 mg/m³ were consistently achieved with molar ratios of O₃ to NOx of less than about 1.5, in another embodiment from about 0.5 to about 1. In some instances, NOx emissions were measured as 0 mg/m³. Based on the above reaction and observations made during full scale testing, molar ratios of less than 0.5 can still achieve significant NOx emissions reductions and with a molar ratio of O₃ to NOx of above 0.5, NOx emissions can be reduced by >90%. Thus, the method of the invention allows one to use significantly less ozone in order to reduce the same amount of NOx. Alternatively, the same amount of ozone will reduce NOx emissions even further compared to the methods of the prior art and in some instances, near-zero NOx emissions can be achieved.

Compared to the state of the art, the method of the invention:
Improves operating costs when treating NOx emissions due to a lower ozone requirement, and therefore lower power and oxygen requirements;
Reduces capital investment or rental cost due to lower ozone requirement, i.e. a smaller ozone generator is required;
Improves investment and operating costs to treat NOx emissions in incinerator units, waste treatment plants, and kilns where alternative technologies are expensive due to high particulate load in flue gas; and
Improves potential for lower NOx emissions, due to more efficient application of ozone to oxidize NOx, near zero-emissions.

Enables a set-point emission concentration of NOx by controlling the ratio of ozone added.

The present invention lowers investment and operating costs thereby improving the economics of employing ozone in treating NOx emissions across additional industrial applications using wet caustic scrubbers or wet ionizing scrubbers, for example in chemical manufacturing and metal processing industries.

While this invention has been described with respect to particular embodiments thereof, it is apparent that numerous other forms and modifications of the invention will be obvious to those skilled in the art. The appended claims in this invention generally should be construed to cover all such obvious forms and modifications which are within the true spirit and scope of the invention.

## Claims

1. A method for removing an impurity from a combustion gas stream wherein said impurity comprises NO, said method comprising:
measuring the amount of NO in said combustion waste stream;
feeding the combustion waste gas stream to a reaction zone;
feeding a sub-stoichiometric molar amount of ozone to the reaction zone necessary to oxidize NO to NO₂, wherein the residence time of said sub-stoichiometric molar amount of ozone and combustion waste gas stream in said reaction zone is less than or equal to 3 seconds; and
feeding the combustion waste gas stream to a scrubber, wherein the NO₂ is removed from said combustion waste gas stream.

2. The method of claim 1 wherein the molar ratio of ozone to NO in the reaction zone is less than 1.5.

3. The method of claim 1 wherein the molar ratio of ozone to NO in the reaction zone is from about 0.3 to less than 1.5.

4. The method of claim 1 wherein the molar ratio of ozone to NO in the reaction zone is from about 0.5 to about 1.0.

5. The method of any of claims 1 to 4 wherein the residence time of the ozone and combustion waste gas stream in said reaction zone is from about 0.5 to about 2.5 seconds.

6. The method of any of claims 1 to 5 wherein the residence time of the ozone and combustion waste gas stream in said reaction zone is from about 0.5 to about 2.0 seconds.

7. The method of any of claims 1 to 6 wherein the residence time of the ozone and combustion waste gas stream in said reaction zone is from about 0.5 to about 1.5 seconds.

8. The method of any of claims 1 to 7 wherein the scrubber is a wet alkaline scrubber.

9. The method claim 8 wherein said scrubber utilizes a scrubber solution comprising sodium hydroxide, potassium hydroxide, or a mixture thereof.

10. The method of claim 9 wherein the hydroxide ions present in said alkaline scrubber, in combination with NO₂ and any remaining NO in said waste stream, enable the formation of nitrites.

11. The method of any of claims 1 to 10 wherein the combustion waste gas stream is fed to a quench unit prior to feeding said waste gas stream to the reaction zone; whereby the combustion waste gas stream is reduced in temperature and the formation of additional contaminants is reduced.

12. The method of any of claims 1 to 11 wherein from 20 to 80% of the NO present in said waste gas stream is oxidized to NO₂, preferably from 30 to 70% of the NO present in said waste gas stream is oxidized to NO₂, preferably from 40 to 55% of the NO present in said waste gas stream is oxidized to NO₂.

13. A method for removing NO from a combustion gas stream, said method comprising:
measuring the amount of NO in said combustion waste stream;
feeding the combustion waste gas stream to a reaction zone;
feeding an amount of ozone to the reaction zone effective to oxidize from about 20 to 80% of the NO present in said waste gas stream to NO₂; and
feeding the combustion waste gas stream to a scrubber, wherein the NO₂ is removed from said combustion waste gas stream.

14. The method of claim 13 wherein the molar ratio of ozone to NO in the reaction zone is from about 0.3 to less than 1.5 and the residence time of the ozone and combustion waste gas stream in said reaction zone is from about 0.5 to about 3.0 seconds.

15. The method of claim 13 or 14 wherein the combustion waste gas stream is fed to a quench unit prior to feeding said waste gas stream to the reaction zone; whereby the combustion waste gas stream is reduced in temperature and the formation of additional contaminants is reduced.
